Europäisches Patentamt

(19) European Patent Office

Office européen des brevets

(11) Numéro de publication: **0 085 616**

**A1**

(12) **DEMANDE DE BREVET EUROPEEN**

(21) Numéro de dépôt: **83400186.9**

(22) Date de dépôt: **27.01.83**

(51) Int. Cl.³: **G 21 C 17/08**
**B 63 C 11/48**

(30) Priorité: **28.01.82 FR 8201315**

(43) Date de publication de la demande:
**10.08.83 Bulletin 83/32**

(84) Etats contractants désignés:
**BE CH DE GB IT LI SE**

(71) Demandeur: **SOCIETE D'ETUDES ET DE REALISATIONS**
**INDUSTRIELLES S.E.R.I.**
**2, avenue du Vieil Etang**
**F-78390 Bois d'Arcy(FR)**

(72) Inventeur: **Jacq, Alain**
**27, rue de la Porte Saint Martin**
**F-78770 Thoiry(FR)**

(74) Mandataire: **Réal, Jacques et al,**
**Régie Nationale des Usines Renault SCE 0804**
**F-92109 Boulogne Billancourt Cedex(FR)**

(54) Dispositif de surveillance et de visualisation des opérations de manutention ou autres en milieu aquatique.

㊻ Dispositif de surveillance et de visualisation, à l'aide d'un ensemble comportant notamment une caméra immergée, des opérations de manutention ou autres en milieu aquatique. L'ensemble comportant notamment une caméra immergée (7) du dispositif de surveillance et de visualisation est relié à un engin flottant de positionnement (23) dont le déplacement est assuré par un ensemble d'éjecteurs à eau (32, 32').

Application principale: surveillance des opérations en piscine de réacteur nucléaire.

FIG.3

EP 0 085 616 A1

Dispositif de surveillance et de visualisation des opérations de manutention ou autres en milieu aquatique.

L'invention concerne un dispositif permettant d'effectuer le déplacement et le positionnement précis d'un système de prise de vue en milieu sub-aquatique, hautement radioactif et/ou contaminé, notamment dans la piscine d'un bâtiment réacteur P.W.R.

La sécurité des personnes représente un problème essentiel en milieu radioactif fortement contaminé. Pour assurer la surveillance des opérations présentant des risques nucléaires, il s'avère alors nécessaire de disposer d'un dispositif et d'une machine qui séparent le personnel du milieu radioactif et/ou contaminé. Les incidents ou accidents sont évités en particulier par une visualisation des opérations effectuées à distance ; ceux-ci peuvent mettre en jeu la sécurité de l'installation, des opérateurs et même des populations avoisinantes lorsqu'ils se produisent au niveau de la cuve du réacteur et/ou s'ils concernent des éléments incorporant des produits hautement radioactifs. Les opérations relatives notamment aux éléments combustibles et à la cuve d'un réacteur nucléaire de type P.W.R., telles que le chargement et le déchargement, doivent donc être effectuées sous une surveillance et un contrôle rigoureux ; comme celles-ci se déroulent sous une épaisseur d'eau protectrice suffisante, elles impliquent un positionnement aisé et précis du dispositif de surveillance dans le milieu sub-aquatique fortement radioactif et/ou contaminé.

Hormis le recours exceptionnel aux plongeurs autonomes immergés dans un milieu aquatique radioactif et contaminé avec de sérieux risques pour le personnel pratiquant cette plongée, la technique actuelle de visualisation consiste essentiellement à immerger une caméra de télévision au bout d'une perche rigide, supportée de manière fixe par une machine se déplaçant sur le "sol" (ou sur un plancher) de la centrale nucléaire, notamment une machine de chargement/déchargement.

Ce "sol" est plus particulièrement le plancher du niveau 20 m des centrales du type P.W.R.

Les systèmes de visualisation courants présentent l'inconvénient d'un champ d'investigation très faible car la caméra balaie un angle solide peu important et la profondeur de champ est rapidement limitée par les distances éclairage-objet-caméra.

Un second inconvénient réside dans la rigidité relative de ces systèmes. Ceux-ci dépendent en effet des machines annexes qui les supportent et représentent une gêne pour les déplacements et les opérations de ces dernières.

Un troisième inconvénient réside dans la présence de ces systèmes à proximité de leur emplacement de service dans la centrale nucléaire, due à leur relative rigidité de structure et de mise en oeuvre. Ils peuvent donc recevoir des doses d'irradiation susceptibles d'entraîner une dégradation des matériaux.

L'invention propose un dispositif qui permet, grâce à une caméra immergée, de visualiser un champ d'action correspondant à un angle de 360 ° en azimut et à un angle de 135 ° environ en site à partir de la verticale descendante, soit environ 3/4 de sphère.

Conformément à l'invention, cette caméra est positionnée en X et Y (abscisses et ordonnées) au moyen d'un "bateau" auquel elle est liée, et en Z (profondeur d'immersion) par un système dit "monte et baisse" faisant partie intégrante dudit bateau. En outre, le bateau est dirigé par télécommande associée ou non à un système d'ancrage dynamique.

L'invention procure ainsi un suivi de visualisation avec une bonne précision de situation dans l'espace sous-marin n'affectant pas la qualité de la prise de vue de façon à pouvoir inspecter de près tous les matériels fonctionnant en piscine, de lire la plupart des inscriptions, marques ou repères préalablement disposés sur lesdits matériels immergés, de suivre, en pouvant changer et donc choisir le meilleur angle de prise de vue, toutes les opérations en milieu immergé, que ce soit de façon statique ou dynamique.

L'invention permet, par exemple, l'inspection des éléments combustibles hors de la cuve et en place à l'intérieur de la cuve, la recherche et la mesure des défauts de surface de ces éléments et le suivi de l'extraction d'une capsule d'irradiation.

La présente invention s'applique en particulier aux installations nucléaires dans lesquelles elle augmente la sécurité du matériel et du personnel, notamment lors du suivi des opérations de déchargement et de rechargement des éléments combustibles présentant un fort degré d'irradiation et/ou de contamination.

L'invention est expliquée plus en détails ci-après à l'aide d'un de ses modes de réalisation, pris à titre illustratif mais nullement limitatif, en se référant aux dessins annexés dans lesquels :

- la figure 1 représente schématiquement une piscine 1 de réacteur nucléaire du type P.W.R. pendant la période de déchargement des éléments combustibles et le "suivi de visualisation" objet de la présente invention.

- La figure 2 représente schématiquement le système de propulsion et de positionnement du "suivi de visualisation".

- La figure 3 représente schématiquement l'ensemble du "suivi de visualisation".

- La figure 4 représente schématiquement le système dit "monte et baisse" qui permet d'assurer le positionnement précis en profondeur de l'ensemble caméra 7.

- La figure 5 représente l'ensemble caméra 7 du "suivi de visualisation".

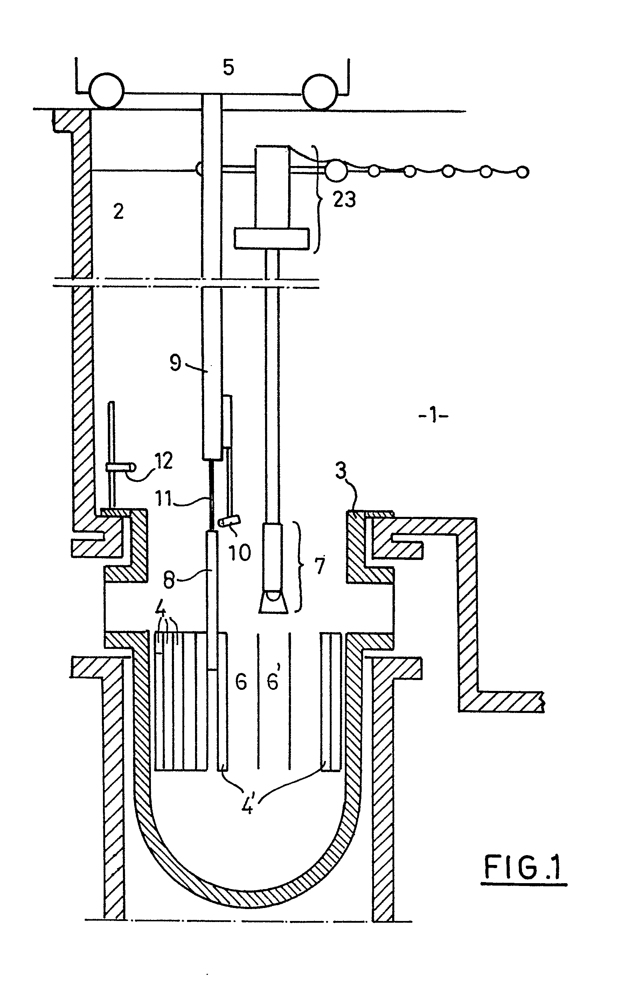

Sur la figure 1, la piscine 1 est remplie d'eau jusqu'au niveau supérieur 2 et la cuve 3 du réacteur nucléaire a été ouverte pour permettre l'accès aux éléments combustibles 4, 4' logés dans le coeur du réacteur.

L'enlèvement des éléments combustibles 4, 4' par la machine de chargement/déchargement 5 libère des canaux 6, 6' pour permettre la descente et la mise en position de travail de l'ensemble caméra du "suivi de visualisation" 7. On observe également sur la figure 1 la caméra 7 contrôlant un élément combustible 8 en position d'enlèvement.

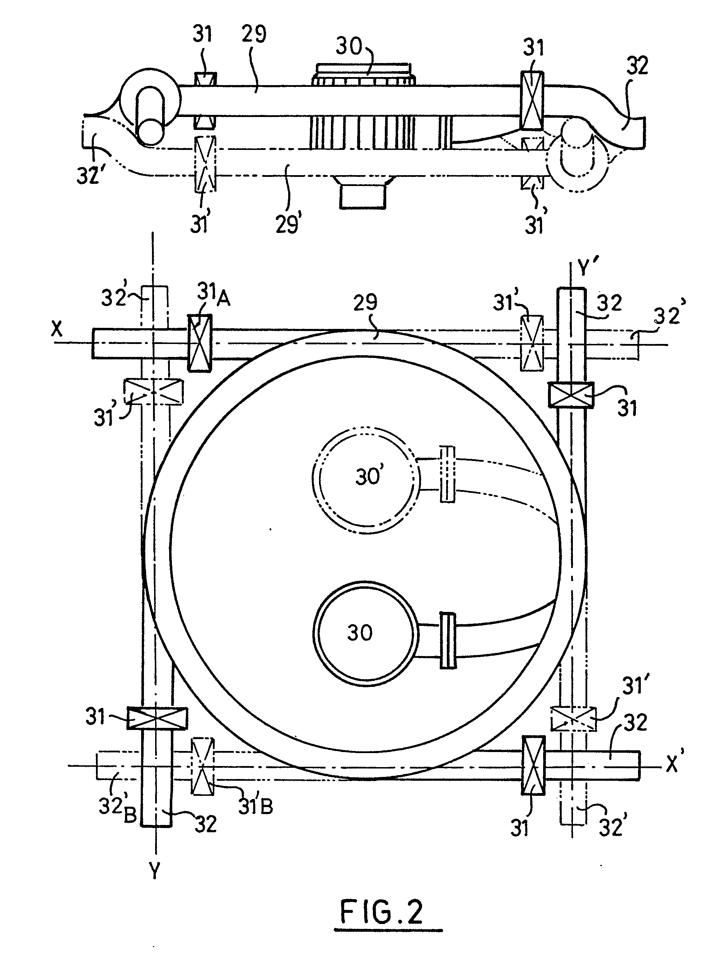

La figure 2 représente le système de propulsion composé de deux distributeurs 29, 29' dans lesquels une ou plusieurs pompes 30, 30' maintiennent une pression d'eau qui sert à assurer la propulsion et le positionnement du "bateau" 23 et donc de l'ensemble du "suivi de visualisation". Chaque distributeur alimente des éjecteurs d'eau 32, 32' perpendiculaires deux à deux, par l'intermédiaire d'ensembles de vannes 31, 31' ou autres organes de réglage de débit. Les distributeurs sont de préférence des tores. Un nombre de quatre éjecteurs par distributeur est préférentiellement choisi pour l'invention. Pour un même tore, les éjecteurs sont de préférence disposés sur des axes x, y ; x', y' tangents audit tore et perpendiculairement entre eux.

Les vannes peuvent être commandées selon une combinaison quelconque mais on pourra remarquer que, selon une particularité de l'invention, le bateau sera animé d'un mouvement de giration vers la droite si on ouvre au moins une vanne 31 ou vers la gauche si on ouvre au moins une vanne 31'.

Si on ouvre ensemble une vanne 31 A et une vanne 31' B, celles-ci vont respectivement alimenter les éjecteurs 32 A et 32' B qui, de par leur disposition relative selon une autre particularité de l'invention. provoquent une force propulsive entraînant le bateau vers la droite (sur la figure 2).

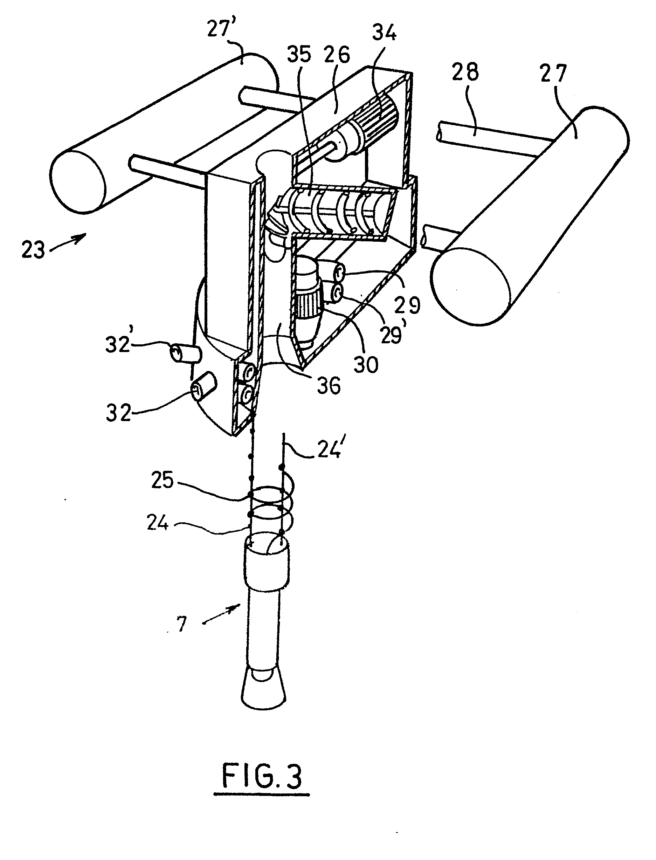

On distingue sur la figure 3, l'ensemble caméra 7 et l'ensemble de positionnement 23 déjà désigné par le terme "bateau". L'ensemble caméra 7 décrit précédemment est suspendu au bateau 23 par deux chaînes 24, 24' au moins, ce qui permet de conserver une référence constante des axes de la caméra 7 par rapport aux axes du bateau 23 et d'assurer la sécurité en milieu nucléaire. Un câble d'alimentation 25 préférentiellement lié aux chaînes 24, 24' permet d'assurer les liaisons électriques nécessaires au bon fonctionnement de l'ensemble caméra 7. Un ou plusieurs tuyaux peuvent être associés au câble électrique si l'ensemble nécessite la distribution d'un ou de plusieurs fluides.

Le bateau présente un volume principal de flottabilité appelé "coque" 26 auquel sont adjoints au moins deux "flotteurs" 27, 27' reliés à cette coque par des bras de liaison 28. Le bateau incorpore :

- un système de propulsion et de positionnement en surface dudit bateau décrit à la figure 2 dont on aperçoit une pompe 30, les tores 29, 29' de distribution et des éjecteurs 32, 32' ;

- un système de positionnement vertical de la caméra, dit système "monte et baisse" décrit ci-après.

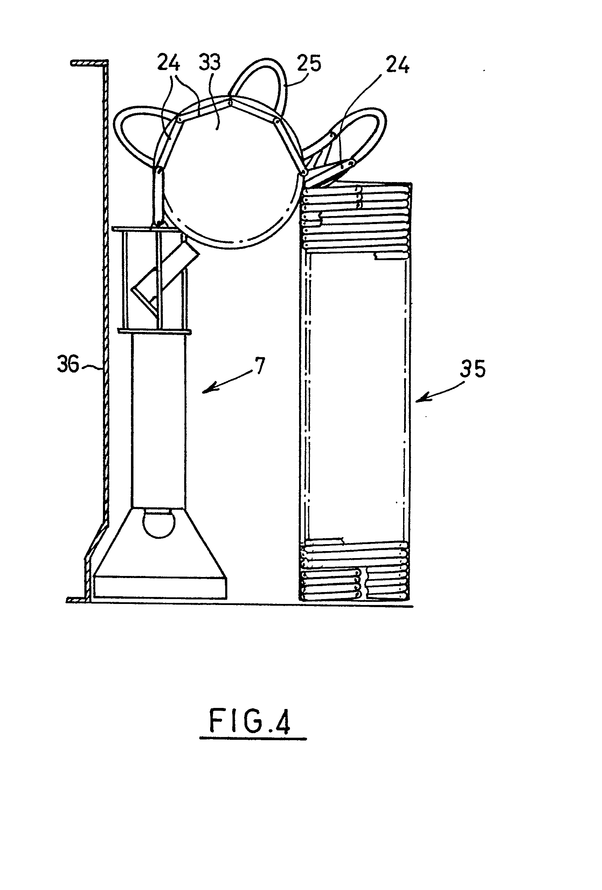

La figure 4 montre le système "monte et baisse" partiellement représenté sur la figure 3 ; il comprend d'une part, des roues d'entraînement 33 de chaînes 24, 24' actionnées par un motoréducteur 34 visible sur la figure 3 et d'autre part, un système de stockage 35 appelé "magasin" des chaînes 24, 24' et du câble spiralé 25. La caméra 7 se loge en position rentrée dans un puits 36 aménagé à l'intérieur du bateau 23.

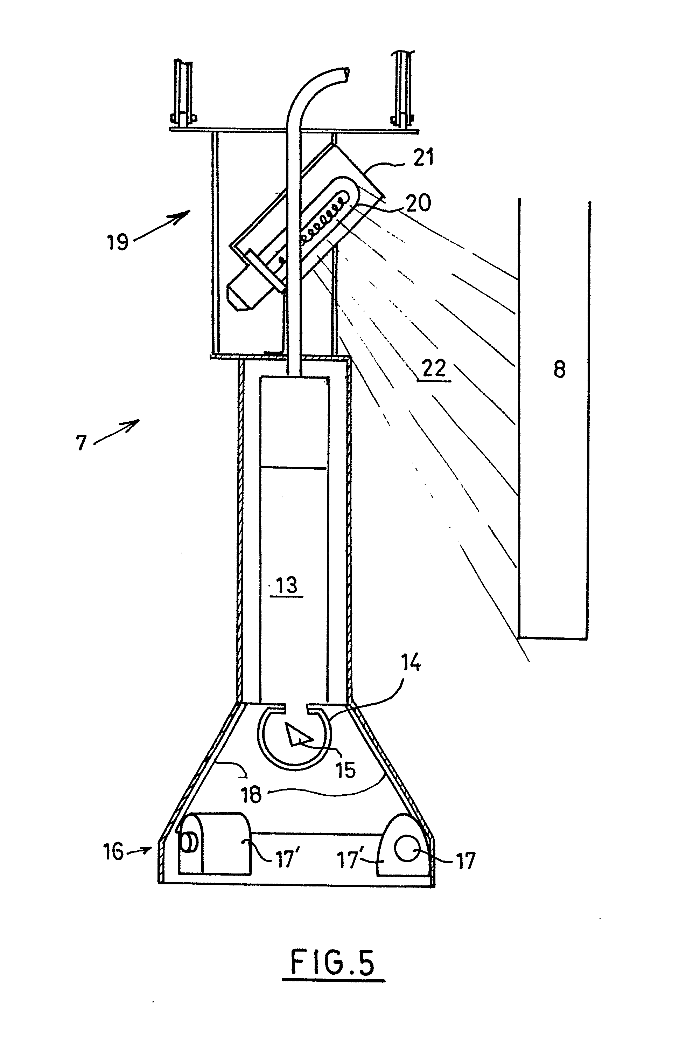

Sur la figure 5, la caméra vidéo 13 constituant un ensemble étanche comporte un système optique 14 qui permet, grâce à un jeu de prismes 15 télécommandés ou à mouvements programmés, un balayage panoramique sur les 3/4 environ d'une sphère. Deux systèmes d'éclairage sont fixés à cette caméra :

- un éclairage 16 dirigé verticalement et placé sous la caméra 13 pour éclairer vers le bas, comprend préférentiellement trois lampes 17 munies de réflecteurs 17', angulairement espacées de 120 ° environ et montées au bout de trois pieds 18 également espacés de 120 ° qui de plus protègent la caméra 13 et son système optique 14 contre les chocs éventuels.

- Un éclairage réglable 19 placé au dessus de la caméra 13 et dirigé de façon à éclairer vers le bas selon un angle approximatif de 45°, comprend préférentiellement trois lampes 20 munies de réflecteurs 21 et décalées angulairement d'environ 120°.

L'ensemble des deux systèmes permet un éclairage correct de tout objet situé dans le champ de vision de la caméra, comme par exemple, un élément combustible 8 éclairé par un faisceau 22 visualisé par l'ensemble caméra 7.

Le dispositif de surveillance et de visualisation précédemment décrit est utilisé de la manière suivante :

L'ensemble du "suivi de visualisation" étant en place dans l'eau de la piscine, un câble électrique flottant (schématisé sur la figure 1) ou tout autre moyen de liaison assurant l'amenée de la force motrice (électrique ou autre), la transmission des informations de contrôle et de commande. Une partie des systèmes de contrôle et de commande sont embarqués et peuvent réagir de façon autonome, indépendamment ou non des ordres et informations transmis par l'intermédiaire de la liaison assurée par le câble cité ci-dessus.

Les pompes 30, 30' entretiennent en fonctionnement une pression d'eau dans les tores 29, 29' ; l'eau est celle du milieu ambiant, c'est-à-dire dans le cas particulier qui est décrit, celle de la piscine d'une centrale nucléaire. Un ordre de commande interne ou externe au bateau arrive sur l'une ou l'autre des vannes 31, 31' et l'eau sous pression dans les tores passe avec une certaine vitesse dans les éjecteurs 32, 32' pour générer par réaction une force sur le bateau 23.

L'ordre de commande d'ouverture ou de fermeture des vannes 31, 31' peut avantageusement pour l'invention être modulé et commandé par un calculateur embarqué ou non de manière à pouvoir déplacer le bateau 23 suivant un trajet prédéterminé en agissant sur les vannes une à une, deux à deux ou selon toute autre combinaison. Une référence fixe extérieure au bateau peut aussi, grâce à un système approprié embarqué ou non, permettre par son action sur la commande des vannes 31, 31' d'assurer un positionnement fixe du bateau sur l'eau ; ces systèmes sont habituellement dénommés ancrages dynamiques.

Lorsque le bateau 23 est correctement positionné grâce à son système de propulsion, l'ordre est donné à la caméra 7 de descendre par télécommande ou tout autre système de commande adéquat, vers le point d'observation qui lui est astreint au-dessus de la cuve ouverte du réacteur.

Le moto-réducteur 34 actionne les roues d'entraînement 33 ; les chaînes 24, 24' et le câble 25 se dévident et la caméra 7 descend sous l'action des forces de gravité.

La machine de déchargement s'est auparavant placée par l'intermédiaire de son système d'indexage et de positionnement au dessus et dans l'axe de l'élément combustible à décharger. Cette machine possède une caméra 10 et un système d'éclairage lui permettant de voir le dessus de l'élément combustible 8 qui doit être pris et le grappin de préhension 11 (cf. fig. 1).

Le grappin est descendu et amarré à l'élément combustible. Le mouvement de la caméra 10 étant associé au grappin, celle-ci ne visualise plus que ce dernier, une fois l'accrochage effectué.

Par contre, la caméra 7 du "suivi de visualisation" située à côté peut, grâce à la vision panoramique qu'elle possède, contrôler et guider les opérateurs dans leurs mouvements.

La caméra 7 peut ainsi contrôler sur toute sa hauteur, l'élément combustible 8. Elle peut aussi se déplacer grâce à son système de propulsion autour de l'élément combustible pour l'observer sur toute sa surface, ce que ne permet pas la caméra 10 solidaire de la machine de déchargement ou une caméra 12 qui serait montée sur un point fixe et indissociable de ladite machine, d'un pont passerelle ou du bord de la piscine.

Lorsqu'un nombre suffisant d'éléments combustibles a été retiré du coeur du réacteur, la caméra 7 peut descendre dans le canal 6 libéré et inspecter, grâce à son suivi panoramique, les éléments 4' encore en place dans le coeur du réacteur.

Comme il va de soi, et comme il résulte d'ailleurs déjà de ce qui précède, l'invention ne se limite nullement au mode d'application et de réalisation qui a été plus spécialement envisagé ; elle en embrasse au contraire toutes les variantes.

REVENDICATIONS

1. Dispositif de surveillance et de visualisation, à l'aide d'un ensemble comportant notamment une caméra immergée, des opérations de manutention ou autres en milieu aquatique et sous-marin hautement radioactif et contaminé, notamment dans une piscine de bâtiment réacteur nucléaire, caractérisé en ce que cet ensemble (7) muni notamment d'une caméra est relié à un engin flottant de positionnement (23) dont le déplacement est assuré par un ensemble d'éjecteurs à eau (32, 32').

2. Dispositif selon la revendication 1, caractérisé en ce que les éjecteurs à eau (32, 32') sont alimentés par deux distributeurs (29, 29'), au moins une pompe (30, 30') et des ensembles de vannes (31, 31').

3. Dispositif selon la revendication 1 ou 2, caractérisé en ce que les deux distributeurs (29, 29') présentent une configuration torique.

4. Dispositif selon l'une quelconque des revendications 1 à 3, caractérisé en ce que les éjecteurs à eau (32, 32') et les vannes (31, 31') sont au nombre de quatre par distributeur.

5. Dispositif selon l'une quelconque des revendications 1 à 4, caractérisé en ce que, pour un même distributeur, les éjecteurs et les vannes sont de préférence disposés sur des axes tangents audit distributeur.

6. Dispositif selon l'une quelconque des revendications 1 à 5, caractérisé en ce que les éjecteurs sont utilisés de préférence par couples, les éjecteurs d'un couple présentant la même orientation et le même sens de fonctionnement.

7. Dispositif selon l'une quelconque des revendications 1 à 6, caractérisé en ce que les vannes (31, 31') reçoivent un ordre de commande d'ouverture ou de fermeture qui est modulé et commandé par un calculateur.

8. Dispositif selon l'une quelconque des revendications 1 à 7, caractérisé en ce que les vannes (31, 31') reçoivent un ordre de commande d'ouverture ou de fermeture qui est modulé et commandé par un système dit ancrage dynamique.

9. Dispositif selon l'une quelconque des revendications 1 à 8, caractérisé en ce que l'ensemble (7) muni notamment d'une caméra immergée comporte une caméra vidéo (13) étanche, un bloc optique (14) et un jeu de prismes mobiles (15).

10. Dispositif selon l'une quelconque des revendications 1 à 9, caractérisé en ce que le bloc optique (14) présente une forme sphérique et permet par l'intermédiaire du jeu de prismes (15) télécommandés ou à mouvements programmés, un balayage panoramique sur _es 3/4 environ d'une sphère.

11. Dispositif selon l'une quelconque des revendications 1 à 10, caractérisé en ce que l'ensemble (7) comportant notamment une caméra est équipé d'un premier système d'éclairage (16) placé sous la caméra (13) et dirigé verticalement vers le bas, ainsi que d'un deuxième système d'éclairage (19) réglable, placé au dessus de la caméra (13) et dirigé vers le bas selon un angle approximatif de 45°.

12. Dispositif selon l'une quelconque des revendications 1 à 11, caractérisé en ce que l'ensemble (7) comportant notamment une caméra est positionné verticalement par un système de montée et de descente (24, 34, 35) intégré à l'engin flottant (23).

13. Dispositif selon l'une quelconque des revendications 1 à 12, caractérisé en ce que le système de montée et de descente (24, 34, 35) comprend au moins deux chaînes (24, 24') entraînées par des roues (33) elle;-memes actionnées par un motoréducteur (34).

14. Dispositif selon l'une quelconque des revendications 1 à 13, caractérisé en ce que le système de montée et de descente intégré à l'engin flottant comporte un magasin de stockage (35), des chaînes (24, 24') et du câble (25).

0085616

-1-

FIG.1

FIG.2

FIG.3

0085616

FIG.4

FIG.5

Office européen
des brevets

**RAPPORT DE RECHERCHE EUROPEENNE**

0085616
Numero de la demande

EP 83 40 0186

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-3 774 564 (L.A.BONDON et al.) *En entier* | 1 | G 21 C 17/08 <br> B 63 C 11/48 |
| Y | US-A-3 324 239 (I.C.JACOBSON) *Colonne 5, lignes 18-64; figures 1,2* | 1,12, 13 | |
| A | GB-A-2 004 818 (THE UNIVERSITY OF STRATHCLYDE ROYAL COLLEGE) *Abrégé; page 2, lignes 80-128; figures 1,2* | 12,13 | |
| A | FR-A-2 416 808 (SOCIETE PROVENCALE DES ATELIERS TERRIN) *Figures 1-4; revendication 1* | 1 | |
| A | CEGB TECHNICAL DISCLOSURE BULLETIN, no.253, septembre 1975, pages 1-3, Londrés (GB) R.F.PULFER: "Television techniques for reactor inspection" *Page 2, lignes 13-28; figures 1,2* | 9,10, 11 | DOMAINES TECHNIQUES RECHERCHES (Int. Cl. ³) <br><br> G 21 C 17/00 <br> B 63 C 11/00 <br> B 63 H 25/00 |
| A | KERTECHNIK, vol.19, no. 3, 1977, pages 110-116, Munich (DE); B.J.SELIG: "Nuclear systems inspection services" *Paragraphe 2; figures 1,2* | 1,9,11 | |

--- -/-

Le présent rapport de recherche a été établi pour toutes les revendications

| Lieu de la recherche <br> LA HAYE | Date d'achèvement de la recherche <br> 29-04-1983 | Examinateur <br> ASSI G.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

**0085616**
Numéro de la demande

**RAPPORT DE RECHERCHE EUROPEENNE**

Office européen
des brevets

EP 83 40 0186

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 474 750 (R.D.LE BLUE) *Abrégé; revendication 1* | 1,2,6 | |
| | ----- | | |
| | | | DOMAINES TECHNIQUES RECHERCHES (Int. Cl. ³) |

Le present rapport de recherche a été établi pour toutes les revendications

| Lieu de la recherche | Date d'achèvement de la recherche | Examinateur |
|---|---|---|
| LA HAYE | 29-04-1983 | ASSI G.A. |